(19) **Europäisches Patentamt**
**European Patent Office**
**Office européen des brevets**

(11) **EP 1 538 118 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
*B65G 54/02* (2006.01)     *B60L 13/04* (2006.01)

(21) Anmeldenummer: **04106299.3**

(22) Anmeldetag: **04.12.2004**

(54) **Vorrichtung zum schwebenden Transport von Gegenständen**

Device for the floating transport of articles

Dispositif pour le transport par flottage d'articles

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.12.2003 AT 19562003**
**08.10.2004 AT 16792004**

(43) Veröffentlichungstag der Anmeldung:
**08.06.2005 Patentblatt 2005/23**

(73) Patentinhaber: **COLENTA Labortechnik Ges.m.b.H. & Co. KG.**
**2700 Wiener Neustadt (AT)**

(72) Erfinder:
• **Hauser, Hans**
**1160 Wien (AT)**
• **Fulmek, Paul**
**1230 Wien (AT)**

(74) Vertreter: **Müllner, Martin et al**
**Patentanwalt**
**Weihburggasse 9**
**Postfach 159**
**1014 Wien (AT)**

(56) Entgegenhaltungen:
**EP-A- 0 356 370**     **DE-A1- 19 501 571**
**DE-A1- 19 629 033**     **US-A1- 2003 005 851**

• **MILLER D L: "FRICTIONLESS BEARING SUPPORT FOR VACUUM TRANSPORT" IBM TECHNICAL DISCLOSURE BULLETIN, IBM CORP. NEW YORK, US, Bd. 19, Nr. 8, 8. Januar 1977 (1977-01-08), Seite 2839, XP002149027 ISSN: 0018-8689**

## Beschreibung

**Technisches Gebiet**
Die Erfindung betrifft eine Vorrichtung zum schwebenden Transport von Gütern mittels Magneten und/oder Elektreten mit mindestens einer Schiene und mindestens einem Läufer.

## Stand der Technik

Der Transport von Gegenständen in einem Schwerkraft-Feld ist stets mit Energieaufwand verbunden - auch wenn der Transport quer zur Richtung der Schwerkraft erfolgt -, da neben dem allfälligen Luftwiderstand auch Roll- bzw. Gleitwiderstände überwunden werden müssen. Um letzteren Nachteil zu vermeiden, wurden verschiedene Schwebesysteme erfunden, die im Wesentlichen auf magnetischen Kräften zwischen stromdurchflossenen Spulen, Supraleitern und/oder Permanentmagneten beruhen. Ein Problem dabei ist, dass es aufgrund der Natur von Magnetfeldern nicht möglich ist, einen Körper ausschließlich mit Permanentmagneten stabil in Schwebe zu halten. Es ist möglich, einen Körper in vertikaler Richtung stabil zu halten, aber dann ist er in horizontaler Richtung labil (und umgekehrt).
Die bekannten Systeme verwenden bei großen Anlagen ein geregeltes Magnetfeld zur Stabilisierung, wofür einerseits Energie und andererseits eine hochdynamische Lage-Regelung mit Sensoren erforderlich ist. Bei kleineren Anlagen ist solch ein Regelsystem zu teuer, hier muss man sich mit mechanischen Führungen behelfen.
Im IBM Technical Disclosure Buelltin Bd. 19 (8), S. 2839 (1977) wird eine prinzipielle Möglichkeit beschrieben, wie mittels permanentmagnetischen Schienen und Läufer eine reibungsarme Transport-Auflage in Vakuum-Anlagen bewerkstelligt werden könnte. Die gegenständliche Erfindung unterscheidet sich im Wesentlichen dadurch von dieser Methode, dass das Hängen des Läufers in einem horizontalen Magnetfeld ausgenutzt wird.

## Offenbarung der Erfindung

### Technische Aufgabe

Es ist Aufgabe der vorliegenden Erfindung, eine Vorrichtung der eingangs genannten Art zu schaffen, bei der die geometrische Anordnung der Magnete bzw. Elektrete so getroffen ist, dass sich die mechanische Führung ohne größeren Aufwand ergibt.

### Technische Lösung

Diese Aufgabe wird erfindungsgemäß dadurch gelöst, dass der Läufer zumindest zwei miteinander verbundene Permanentmagnete oder Elektrete aufweist, die in einer Ebene magnetisiert bzw. polarisiert sind und deren Magnetisierungs- bzw. Polarisationsrichtungen einander entgegengesetzt sind, dass der Läufer zwischen zumindest zwei Schienen angeordnet ist, die ebenfalls aus jeweils entgegengesetzt magnetisierten bzw. polarisierten Permanentmagneten bzw. Elektreten bestehen, und dass die Magnete bzw. Elektrete des Läufers von der jeweils benachbarten Schiene angezogen werden.
Dadurch wird einerseits durch die vertikalen Komponenten der starken anziehenden Kräfte im inhomogenen Feld zwischen Läufer und Schiene die Gewichtskraft des Läufers kompensiert; und andererseits wird die unvollständige Kompensation der Horizontalkomponente der Kräfte - zufolge der Abhängigkeit der horizontalen Komponenten von der Position des Läufers - durch die jeweils antiparallele Magnetisierung bzw. Polarisation der Läufer- bzw. Schienenmagnete bzw. -elektrete so stark verringert, dass ein äußerst reibungsarmes Gleiten des Läufers zwischen den Schienen gewährleistet wird.
Zur Realisierung eines magnetischen Antriebs ist es günstig, wenn die zumindest zwei Permanentmagnete oder Elektrete des Läufers miteinander mittels eines Distanzstückes verbunden sind und unterhalb des Distanzstückes ein weiterer Permanentmagnet, gegebenenfalls mit Rückschlussjoch, angebracht ist, dessen Streufeld neben einer Vertikalkomponente auch eine Horizontalkomponente in Längsrichtung des Läufers aufweist, sodass er als Antriebsmagnet verwendbar ist. Damit kann auch in darunter liegenden Statorspulen in beliebiger Lage bei Bewegung des Läufers eine Spannung induziert werden, aus der die Position und die Geschwindigkeit des Läufers ermittelt werden kann.
In engen Kurven kann es zu größerer Reibung durch den unsymmetrischen Abstand zwischen Läufer und Schienen und dadurch verschlechterter Kompensation der Horizontalkomponenten der Kräfte kommen. Dieses Problem kann durch eine zusätzliche Führung des Läufers, welche vorzugsweise in der Mitte der Schienen angeordnet ist, gelöst werden. Die Führung kann zwei beispielsweise kugelgelagerte Rollen aufweisen. Durch die Rollen wird auch im Kurvenbereich ein praktisch reibungsfreies Gleiten des Läufers ermöglicht - insbesondere wenn das Spiel gerade so groß bemessen ist, dass jeweils nur eine Seite der jeweiligen Rolle die Wand der Führung berührt.
Restliche Reibungserscheinungen werden dadurch reduziert, dass auf der Außenseite der Läufer- und/ oder der Innenseite der Schienenmagnete bzw. -elektrete eine elektrisch nicht leitende Gleitschicht, beispielsweise aus Teflon, aufgebracht ist.
Insbesondere für den Transport kleiner Gegenstände über weite Strecken ist es sinnvoll, günstige und leicht verfügbare Magnetwerkstoffe zu verwenden. Es ist daher bevorzugt, dass der Läufer aus zwei länglichen, flachen Permanentmagneten gebildet ist, deren Magnetisierung senkrecht sowohl zur längsten als auch zur kürzesten Achse ausgerichtet ist. Für enge Kurven ist es dabei zweckmäßig, wenn die den Schienenmagneten zugewandten Seiten der quaderförmigen Permanentmagnete des Läufers entsprechend dem minimalen Kurvenradius abgerundet bzw. abgeflacht ausgeführt sind. Die Schienen sind zweckmäßigerweise aus langen, quaderförmigen, flachen Permanentmagneten gebildet, deren Magnetisierung senkrecht sowohl zur längsten als auch zur kürzesten Achse und jeweils antiparallel ausgerichtet ist. Darüber hinaus ist es günstig, wenn alle Magnete aus demselben Magnetmaterial, vorzugsweise aus kunststoffgebundenem, hartmagnetischem Ferrit, hergestellt werden.

Bei einer alternativen Ausführungsform der Erfindung wird das Schweben dadurch erreicht, dass der Läufer zumindest zwei miteinander verbundene Permanentmagnete aufweist, die parallel zueinander magnetisiert sind und deren Magnetisierungsrichtungen gleich gerichtet sind, dass die Schiene einen senkrecht magnetisierten Magneten aufweist, dass die Läufermagnete außerhalb des Schienenmagneten zu dessen beiden Seiten angeordnet sind und dass sie von diesem angezogen werden. Bei dieser Ausführungsform erfolgt die Führung in waagrechter Richtung einfach dadurch, dass die beiden Magnete des Läufers den Magnet der Schiene fallweise berühren. Selbstverständlich kann auch hier wieder eine Beschichtung, z.B. mit Teflon, erfolgen, um einen Mindestabstand zu wahren und die Reibung zu verringern.

Bei dieser Ausführung ist es günstig, wenn ein zusätzlicher Magnet, der entgegengesetzt zum Schienenmagneten magnetisiert ist, oberhalb des Schienenmagneten auf dem Läufer angebracht ist. Dadurch wird der Abstand zwischen Läufer und Schiene stabilisiert.

Zur Realisierung des Antriebs können Spulen, gegebenenfalls mit magnetischem Rückschlussjoch, vorgesehen sein, z.B. in einer Haltevorrichtung für den Magneten oder die Magneten der Schienen integriert sein, mit denen mittels elektrischen Strompulsen eine beschleunigende oder bremsende Kraftwirkung mit dem Magnetfeld des Antriebsmagneten oder mit den Magneten des Läufers in Längsrichtung des Läufers erzeugt wird.

Eine optimale Beschleunigung bzw. Abbremsung des Läufers wird erreicht, wenn ein Detektor für die in der Spule bei Annäherung des Läufers in Abhängigkeit von dessen Bewegungsrichtung und Geschwindigkeit induzierte Spannung vorgesehen ist und wenn der beschleunigende oder bremsende Strompuls in der Spule mit einer geschwindigkeitsabhängigen Zeitverzögerung in einer elektronischen Strompuls-Erzeugungseinheit ausgelöst wird, nachdem der Detektor angesprochen hat. Diese Spulen können als ätztechnisch auf einer metallbeschichteten Kunststoffplatte hergestellte Flachspulen ausgeführt sein.

Bei einem Betrieb mit mehreren Läufern ist es vorteilhaft, wenn in die Unterseite des Antriebsmagneten des Läufers Erhebungen und Vertiefungen eingebracht sind, die in Form eines magnetomechanischen Barcodes angeordnet sind, dessen Streufeld bei der Fortbewegung des Läufers eine modulierte Spannung in den Spulen induziert, die zur Registrierung des jeweiligen Läufers einem Analog/Digital-Wandler und dessen Ausgang einer elektronischen Recheneinheit zugeführt werden. Dessen Softwareprogramm ordnet dann den gemessenen Barcode dem jeweiligen Läufer zu.

Eine dritte Ausführungsform, der nicht Teil der Erfindung ist, nutzt nicht die Kraftwirkung im stark inhomogenen Feldbereich zwischen Läufer und Schienen, sondern eine definierte Feldänderung antiparallel zur Schwerkraft. Hier weist der Läufer zwei V-förmig verbundene, quaderförmige Permanentmagnete auf, wobei die Vertikalkomponenten deren Magnetisierung parallel und die Horizontalkomponenten deren Magnetisierung antiparallel orientiert sind, wobei der Läufer weiters ein Balancegewicht unterhalb der V-förmig verbundenen Permanentmagnete aufweist, und die Schienen sind aus langen, V-förmig verbundenen Permanentmagneten gebildet, deren Magnetisierung antiparallel zu jener der Läufermagnete orientiert ist, sodass der Läufer abgestoßen wird. Da einander abstoßende Magnete einander schwächen, ist es günstig, wenn in diesem Fall das Remanenzflussdichte/Koerzivitäts-Verhältnis der Permanentmagnete des Läufers und/oder der Schiene kleiner als 0,75 ist.

Dabei verhindert das Balancegewicht ein Kippen des Läufers senkrecht zur Achse der Schwerkraft. Als Balancegewicht kann auch die Nutzlast verwendet werden.

Auch in diesem Fall ist es natürlich günstig, wenn auf der Außenseite der Läufer- und/oder der Innenseite der Schienenmagnete eine elektrisch nicht leitende Gleitschicht, beispielsweise aus Teflon, aufgebracht ist.

## Kurze Beschreibung der Zeichnungen

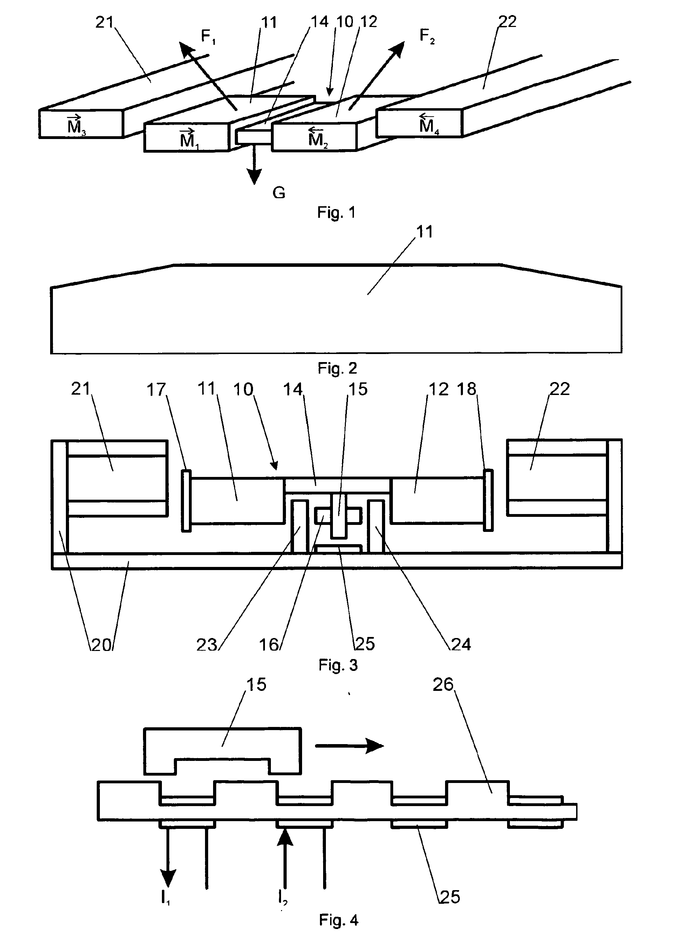

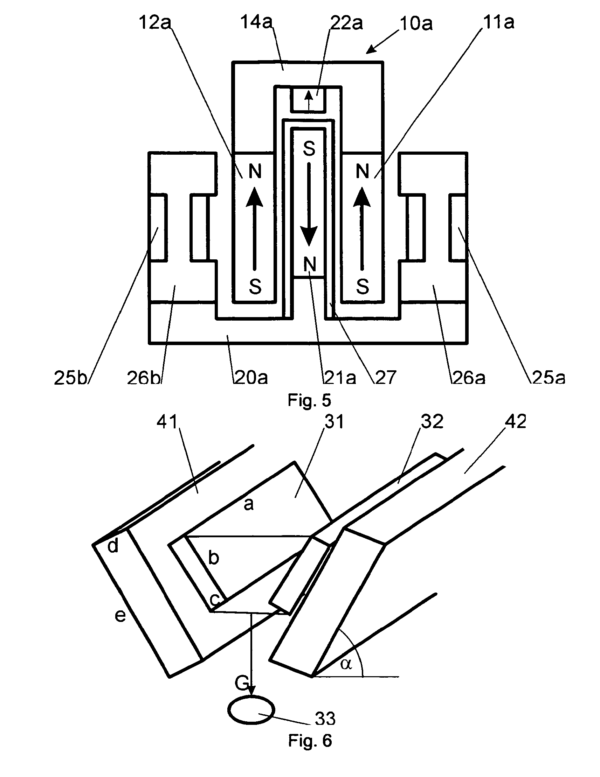

Fig. 1 zeigt schematisch eine erste Ausführungsform der Erfindung; Fig. 2 zeigt schematisch die Abrundung der Außenseite eines Läufermagneten in Draufsicht; Fig. 3 zeigt einen Querschnitt durch die Vorrichtung gemäß Fig. 1; Fig. 4 zeigt einen Antrieb für diese Vorrichtung; Fig. 5 zeigt eine zweite Ausführungsform der Erfindung; und Fig. 6 zeigt eine dritte Ausführungsform , der nicht Teil der Erfindung ist.

## Ausführungsform(en) der Erfindung

Der Einfachheit halber wird (ohne Beschränkung der Allgemeinheit) im Folgenden nur der magnetische Fall beschrieben; die Permanentmagnete lassen sich jedoch durch Elektrete ersetzen.

Der bewegliche Teil oder Läufer 10 (siehe Fig. 1) wird aus zumindest zwei Magneten 11, 12 mit den antiparallelen Magnetisierungen $M_1$ und $M_2$ gebildet. Die beiden Magnete werden mittels eines Distanzstücks 14 zusammengehalten. Der Läufer 10 befindet sich zwischen zumindest zwei Schienen, die aus jeweils einem Magneten 21, 22 mit den antiparallelen Magnetisierungen M und M gebildet und mittels einer Haltevorrichtung 3 4 20 (siehe Fig. 3) zusammengehalten werden. Die Magnetisierungen der benachbarten Magnete 11, 21 sind gleichgerichtet, daher ziehen die beiden Magnete einander an. Da sich der Läufer 10 etwas unterhalb der Schienen befindet, entsteht am Magneten 11 eine Kraft $F_1$ (siehe Fig. 1), die nach außen und oben gerichtet ist. Analoges gilt für die benachbarten Magnete 12, 22: auch die Kraft $F_2$ ist nach oben und außen gerichtet. Die Summe der Kräfte $F_1$ und $F_2$ ist daher nach oben gerichtet. Somit wird der Läufer 10 im inhomogenen Magnetfeld zwischen den Läufer- und Schienenmagneten in Schwebe gehalten.

Die Horizontalkomponenten von $F_1$ und $F_2$ heben sich fast vollständig gegenseitig auf, hängen aber vom Abstand zwischen den Läufer- und Schienenmagneten ab. Leider ist das System nicht selbstrückstellend (das ist bei Magneten unmöglich), d.h. bei einer Abweichung des Läufers nach rechts ist auch die Summe der Kräfte $F_1$ und $F_2$ nach rechts gerichtet, verstärkt also die Abweichung. Es ist daher eine mechanische Führung notwendig, um den Läufer 10 in der Mitte zu halten.

Die Läufer- und Schienenmagnete sind jeweils entgegengesetzt magnetisiert, um die horizontalen Kräfte bei einer Abweichung von der Mittellage möglichst gering zu halten. Damit sind die Kräfte auf die Führung gering und die Bewegung des Läufers erfolgt aus diesem Grund praktisch reibungsfrei.

Um die Produktion der Schienen möglichst einfach und preisgünstig zu gestalten, werden für deren Herstellung Polymer-Bänder mit eingebetteten Ferritpartikeln vorgeschlagen. Zur Kraftwirkung wird der Feldgradient in der Nähe der Kanten der Magnetplatten ausgenutzt.

Die Magnete 11, 12 des Läufers 10 sind als Platten ausgebildet. Sie sind - ebenso wie die Schienenbänder - planar angeordnet und jeweils gegensinnig magnetisiert. (Magnetisierungen $M_1$ und $M_2$ sowie $M_3$ und $M_4$) Der Läufer 10 wird hingegen auf beiden Seiten von den Schienen 21, 22 angezogen. Es entsteht dadurch in horizontaler Richtung eine schmale, nahezu kraftfreie Zone zwischen dem Läufer 10 und den Schienen 21, 22, die ein praktisch verlustfreies Gleiten ermöglicht. Der mittlere Abstand zwischen dem Läufer 10 und den Schienen 21, 22 beträgt in diesem Beispiel wenige Zehntelmillimeter.

Die Führung in horizontaler Richtung kann z.B. durch die Magnete selbst erfolgen. Zu diesem Zweck kann eine reibungsarme Kunststoffbeschichtung 17, 18 (siehe Fig. 3) vorgesehen werden. Der Läufer pendelt dann bei seiner Bewegung leicht hin und her, schlägt an einer Seite an, wird reflektiert, schlägt dann an der anderen Seite an, usw. Durch die Kunststoffbeschichtung 17, 18 können wesentlich geringere Reibungswerte als etwa im Vergleich zu kugelgelagerten Rollen erzielt werden. Die wesentliche Dämpfung der Bewegung ist durch den Luftwiderstand und durch Ummagnetisierungsverluste im Magnetmaterial gegeben, was aber zwangsläufig bei jedem magnetischen Schwebeverfahren auftritt. Die Kurvenfahrt kann verbessert werden, wenn die den Schienen 21 bzw. 22 zugewandte Seite der quaderförmigen Magnete 11, 12 des Läufers 10 entsprechend dem minimalen Kurvenradius abgerundet bzw. abgeflacht ausgeführt sind (siehe Fig. 2).

In engen Kurven kann es dennoch zu größerer Reibung durch den unsymmetrischen Abstand zwischen dem Läufer 10 (siehe Fig. 3) und den Schienen 21, 22 und die dadurch verschlechterte Kompensation der Horizontalkomponenten der Kräfte kommen. Deshalb ist in der Haltevorrichtung 20 eine zusätzliche Führung 23, 24 für den Läufer 10 vorgesehen. Mittels zweier beispielsweise kugelgelagerter Rollen 16 wird auch im Kurvenbereich ein praktisch reibungsfreies Gleiten des Läufers 10 ermöglicht, insbesondere wenn das Spiel gerade so groß bemessen ist, dass jeweils nur eine Seite der jeweiligen Rolle 16 die Führung 23 oder 24 berührt.

Restliche Reibungserscheinungen werden dadurch reduziert, dass auf der Außenseite der Magnete 11, 12 und/oder Innenseite der Magnete 21, 22 eine dünne, elektrisch nicht leitende Gleitschicht 17, 18, beispielsweise aus Teflon, aufgebracht ist.

Insbesondere in beschränkten räumlichen Verhältnissen ist es vorteilhaft, wenn bei engen 90°-Richtungswechseln der Läufer auf einem kurzen, drehbaren Schienenstück mit Hilfe des Magnetfeldes einer oder mehrerer stromdurchflossener Spulen fixiert wird, das Schienenstück in die gewünschte Richtung gedreht wird und anschließend der Läufer mittels eines Strompulses beschleunigt wird, sodass eine Drehscheibe realisiert wird.

Um die Montage der Schienen zu erleichtern und um temperaturbedingte Verzerrungen zu minimieren, ist es vorteilhaft, wenn die Schienen mit Haltevorrichtung - beispielsweise in einem Spritzguss- oder Extrusionsverfahren - in Teilstücken gefertigt werden, die mit mechanischen Klemmvorrichtungen und elektrischen Steckverbindungen miteinander verbunden werden.

Für den Linearmotor-Antrieb ist unterhalb des Distanzstückes 14 ein weiterer Permanentmagnet, nämlich der Antriebsmagnet 15, angebracht, dessen Streufeld neben einer Vertikalkomponente auch eine Horizontalkomponente in Längsrichtung des Läufers 10 aufweist, damit in darunter liegenden Statorspulen 25 in beliebiger Lage bei Bewegung des Läufers 10 eine Spannung induziert werden kann. Mittels der in der Haltevorrichtung 20 integrierten Statorspulen 25 - gegebenenfalls mit magnetischem Rückschluss 26 (siehe Fig. 4) - wird durch elektrische Strompulse $I_1$, $I_2$ eine beschleunigende oder bremsende Kraftwirkung F mit dem Magnetfeld des Antriebsmagneten 15 in Längsrichtung des Läufers 10 erzeugt. Eine optimale Beschleunigung bzw. Abbremsung des Läufers 10 wird erreicht, wenn mit der in der Spule 25 bei Annäherung des Läufers 10 in Abhängigkeit von dessen Bewegungsrichtung und Geschwindigkeit induzierten Spannung der beschleunigende oder bremsende Stromimpuls in der Spule 25 mit einer geschwindigkeitsabhängigen Zeitverzögerung in einer elektronischen Strompuls-Erzeugungseinheit ausgelöst wird.

Insbesondere zur Realisierung von Weichen ist die Ausführung gemäß Fig. 5 vorteilhaft. Hier weist die Schiene nur einen Magneten 21 a auf, dessen Magnetfeld senkrecht orientiert ist und der auf einer Haltevorrichtung 20a befestigt ist. Die Magnete 11a, 12a des Läufers 10a sind beidseits des Magneten 21a angeordnet, ihre Magnetfelder sind ebenfalls senkrecht orientiert, aber in entgegengesetzter Richtung. Damit werden die Magnete 11a und 12a vom Magneten 21 a angezogen, es entstehen an den Magneten 11a und 12a wiederum Kräfte, die schräg nach oben gerichtet sind und zusammen eine Kraft ergeben, die nach oben gerichtet ist. Es ist ein zusätzlicher Magnet 22a, der entgegengesetzt zum Magneten 21 a magnetisiert ist, oberhalb dieses Magneten 21 a am Läufer 10 angebracht. Er dient zur Stabilisierung des Abstandes zwischen Läufer 10a und Schiene. Mittels Biegung der Schiene können die zu transportierenden Güter leicht auf mehrere Abzweigungen aufgeteilt werden. Weiters ist es vorteilhaft, wenn in diesem Fall die Antriebskräfte, die durch Spulen 25a, 25b - gegebenenfalls mit Magnetjochen 26a, 26b - erzeugt werden, symmetrisch von beiden Seiten direkt auf die Magnete 11a, 12a des Läufers 10a wirken. Dadurch kann ein zusätzlicher Antriebsmagnet entfallen. Zur Verbesserung des seitlichen Austritts der Feldlinien für den Antrieb können die Magnete 11a, 12a auch eine Umlenkung des Flusses an den Enden aufweisen. Mit dieser Variante können auch größere Steigungen leicht bewältigt werden. Die Spulen 25a, 25b bzw. Magnetjoche 26a, 26b können auch unterhalb der Magnete 11a, 12a angeordnet werden.

Um die Reinigung des Schienensystems zu erleichtern und die mechanische Stabilität zu erhöhen ist es vorteilhaft, wenn der Magnet 21a der Schiene samt Haltevorrichtung mit einem dünnen, unmagnetischen Schutzmantel 27, beispielsweise aus Edelstahl, umgeben sind. Dies lässt sich auch bei den Magneten 21, 22 (siehe Fig. 3) verwirklichen.

Im Folgenden wird anhand von Fig. 6 eine alternative Vorrichtung, die im Wesentlichen durch Aufklappen der ebenen Anordnung gemäß den Fig. 1 bis 3 entsteht, beschrieben. Sie weist zwei lange, mittels einer Haltevorrichtung (nicht dargestellt) verbundene, plattenförmige Magnete 41, 42 mit der Dicke d und der Breite e auf. Diese bilden die Schiene. Der Läufer besteht ebenfalls aus zwei mittels Distanzstück verbundenen, plattenförmigen Magneten 31, 32 mit der Länge a, der Breite b und der Dicke c. Die Magnete 31, 32 sind allerdings kürzer und auch schmäler (c < d) als die Magnete 41, 42. Am Läufer ist ein Balancegewicht 33 angebracht, das auch durch die Nutzlast gebildet werden kann. Sowohl die Magnete 41 und 42 als auch die Magnete 31 und 32 bilden jeweils ein V, dessen Schenkel den Winkel 180°-2α einschließen.

Alle Magnete sind senkrecht zur Plattenebene magnetisiert und für jeweils gegenseitige Abstoßungskraft polarisiert. In vertikaler Richtung sorgt somit die zunehmende Abstoßung bei geringer werdendem Abstand zwischen Läufer und Schiene im Gleichgewicht mit der Schwerkraft für das Schweben. Um das Kippen um die Längs- und Querachsen des Läufers zu vermeiden, wird durch das Balancegewicht 33 ein Pendel gebildet, dessen Rückstellkraft mit zunehmendem Auslenkwinkel - ebenfalls zufolge der Schwerkraft - zunimmt. Die Abstoßungskraft

$$F = H_1 \cdot Q_2$$

ist näherungsweise proportional zur Feldstärke $H_1$ der Schiene und zur Polstärke $Q_2$ des Läufers. $H_1$ nimmt näherungsweise gemäß

$$H_1 = \frac{B_1}{\mu_0} \cdot \frac{d}{r+d}$$

und $H_2$ nimmt näherungsweise gemäß

$$H_2 = \frac{B_2}{\mu_0} \cdot \frac{c}{r+c}$$

mit zunehmendem Abstand r von der Magnetoberfläche ab; $\mu_0 = 4\pi \cdot 10^{-7}$ Vs/Am ist die magnetische Feldkonstante. Die Polstärke

$$Q_2 = B_2 \cdot A$$

ist wiederum der Flussdichte $B_2$ des Läufers und dessen Grundfläche A = a.b proportional. Schließlich stellt sich r so ein, dass F mit der Gewichtskraft

$$G = g(\rho V + m)$$

im Gleichgewicht ist, wobei p die Dichte des Magnetmaterials, V das Volumen des Läufers, m die Masse von Probe und Halter sowie g = 9,81 m/s² die Erdbeschleunigung darstellen.

Zu beachten ist, dass sich Magnete, die einander abstoßen, gegenseitig schwächen, wenn sie nur geringen Abstand voneinander aufweisen. Das kann soweit gehen, dass der stärkere Magnet den schwächeren umpolt, sodass sich die Magnete schließlich sogar anziehen.

Definiert man das Verhältnis

$$\frac{B_r}{\mu_0 H_c} = \frac{B_r}{B_c} = \mu_r$$

unter Verwendung der Koerzitivfeldstärke $H_c$ des Magnetmaterials bzw. der Koerzivität $B_c$ und der Remanenzflussdichte $B_r$, so zeigt sich, dass diese Schwächung für $\mu_r < 0{,}75$ in vernünftigen Grenzen bleibt. Ist

$$B_r \approx 0{,}2T$$

dann muss also $H_c > 200$ kA/m sein. Diese Bedingungen werden beispielsweise von anisotropen Ba- und Sr-Ferriten erfüllt.

Auch hier ist wiederum eine Beschichtung der Magneten, z.B. mit Teflon, sinnvoll, weil dadurch ein Mindestabstand zwischen den Magneten sichergestellt wird, sodass die Ansprüche an $\mu_r$ entsprechend reduziert werden können.

**Patentansprüche**

1. Vorrichtung zum schwebenden Transport von Gütern mittels Magneten und/oder Elektreten mit mindestens einer Schiene (21, 22) und mindestens einem Läufer (10), wobei der Läufer (10) zumindest zwei miteinander verbundene Permanentmagnete (11, 12) oder Elektrete aufweist, die in einer Ebene magnetisiert bzw. polarisiert sind und deren Magnetisierungs- bzw. Polarisationsrichtungen ($M_1$, $M_2$) einander entgegengesetzt sind, und wobei der Läufer (10) zwischen zumindest zwei Schienen (21, 22) angeordnet ist, die ebenfalls aus jeweils entgegengesetzt magnetisierten bzw. polarisierten Permanentmagneten (21, 22) bzw. Elektreten bestehen, **dadurch gekennzeichnet, dass** die Magnete (11, 12) bzw. Elektrete des Läufers (10) von der jeweils benachbarten Schiene (21, 22) angezogen werden. (Fig. 1, 3)

2. Vorrichtung nach Anspruch 1, **dadurch gekennzeichnet, dass** die zumindest zwei Permanentmagnete (11, 12) oder Elektrete des Läufers (10) miteinander mittels eines Distanzstückes (14) verbunden sind und dass unterhalb des Distanzstückes (14) ein weiterer Permanentmagnet, gegebenenfalls mit Rückschlussjoch, angebracht ist, dessen Streufeld neben einer Vertikalkomponente auch eine Horizontalkomponente in Längsrichtung des Läufers (10) aufweist, sodass er als Antriebsmagnet (15) verwendbar ist. (Fig. 3, 4)

3. Vorrichtung zum schwebenden Transport von Gütern mittels Magneten mit mindestens einer Schiene und mindestens einem Läufer, wobei der Läufer (10a) zumindest zwei miteinander verbundene Permanentmagnete (11a, 12a) aufweist, die parallel zueinander magnetisiert sind und deren Magnetisierungsrichtungen gleich gerichtet sind, und wobei die Schiene einen senkrecht magnetisierten Magneten (21 a) aufweist, **dadurch gekennzeichnet dass** die Läufermagnete (11a, 12a) außerhalb des Schienenmagneten (21 a) zu dessen beiden Seiten angeordnet sind und dass sie von diesem angezogen werden. (Fig. 5)

4. Vorrichtung nach Anspruch 3, **dadurch gekennzeichnet, dass** ein zusätzlicher Magnet (22a), der entgegengesetzt zum Schienenmagneten (21 a) magnetisiert ist, oberhalb des Schienenmagneten (21 a) auf dem Läufer (10a) angebracht ist. (Fig. 5)

5. Vorrichtung nach einem der Ansprüche 2 bis 4, **dadurch gekennzeichnet, dass** zum Antrieb Spulen (25 bzw. 25a, 25b), gegebenenfalls mit magnetischem Rückschlussjoch (26 bzw. 26a, 26b), vorgesehen sind, z.B. in einer Haltevorrichtung (20 bzw. 20a) für den Magneten (21 a) oder die Magneten (21, 22) der Schiene(n) integriert sind, mit denen mittels elektrischen Strompulsen eine beschleunigende oder bremsende Kraftwirkung mit dem Magnetfeld des Antriebsmagneten (15) oder mit den Magneten (11a, 12a) des Läufers (10,10a) in Längsrichtung des Läufers (10, 10a) erzeugt wird. (Fig. 3 und 4 bzw. Fig. 5)

6. Vorrichtung nach Anspruch 5, **dadurch gekennzeichnet, dass** ein Detektor für die in der Spule (25) bei Annäherung des Läufers (10) in Abhängigkeit von dessen Bewegungsrichtung und Geschwindigkeit induzierte Spannung vorgesehen ist, und dass der beschleunigende oder bremsende Strompuls in der Spule (25) mit einer geschwindigkeitsabhängigen Zeitverzögerung in einer elektronischen Strompuls-Erzeugungseinheit ausgelöst wird, nachdem der Detektor angesprochen hat.

7. Vorrichtung nach Anspruch 6, **dadurch gekennzeichnet, dass** in die Unterseite des Antriebsmagneten (15) des Läufers (10) Erhebungen und Vertiefungen eingebracht sind, die in Form eines magnetomechanischen Barcodes angeordnet sind, dessen Streufeld bei der Fortbewegung des Läufers (10) eine modulierte Spannung in den Spulen (25) induziert, die zur Registrierung des jeweiligen Läufers (10) einem Analog/Digital-Wandler und dessen Ausgang einer elektronischen Recheneinheit zugeführt werden.

8. Vorrichtung nach einem der Ansprüche 1 bis 7, **dadurch gekennzeichnet, dass** auf der Außenseite der Läufer- und/oder der Innenseite der Schienenmagnete bzw. -elektrete eine elektrisch nicht leitende Gleitschicht, beispielsweise aus Teflon, aufgebracht ist.

**Claims**

1. Device for the floating transportation of goods by means of magnets and/or electrets with at least one rail (21, 22) and at least one moving element (10), wherein the moving element (10) has at least two permanent magnets (11, 12) or electrets connected to one another, which are magnetised or polarised in a plane and the magnetisation or polarisation directions ($M_1$, $M_2$) of which are opposed to one another, and wherein the moving element (10) is arranged between at least two rails (21, 22), which also consist of permanent magnets (21, 22) or electrets that are magnetised or polarised in opposite directions, in each case, **characterised in that** the magnets (11, 12) or electrets of the moving element (10) are attracted by the respective adjacent rail (21, 22). (Fig. 1, 3)

2. Device according to claim 1, **characterised in that** the at least two permanent magnets (11, 12) or electrets of the moving element (10) are connected to one another by means of a spacer (14) and **in that** attached below the spacer (14) is a further permanent magnet, optionally with a return yoke, the stray field of which, apart from a vertical component, also has a horizontal component in the longitudinal direction of the moving element (10), so it can be used as a drive magnet (15). (Fig. 3, 4)

3. Device for the floating transportation of goods by means of magnets with at least one rail and at least one moving element, wherein the moving element (10a) has at least two permanent magnets (11 a, 12a) connected to one another, which are magnetised parallel to one another and the magnetisation directions of which are in the same direction, and wherein the rail has a vertically magnetised magnet (21 a), **characterised in that** the moving element magnets (11 a, 12a) are arranged outside the rail magnet (21a) on the two sides thereof and **in that** they are attracted by the latter. (Fig. 5)

4. Device according to claim 3, **characterised in that** an additional magnet (22a), which is magnetised in the opposite direction to the rail magnet (21 a), is attached above the rail magnet (21 a) on the moving element (10a). (Fig. 5)

5. Device according to any one of claims 2 to 4, **characterised in that**, for the drive, coils (25 or 25a, 25b), optionally with a magnetic return yoke (26 or 26a, 26b) are provided, for example are integrated in a holding device (20 or 20a) for the magnet (21a) or the magnets (21, 22) of the rail(s), with which, by means of electric current pulses, an accelerating or braking force action is produced with the magnetic field of the drive magnet (15) or with the magnets (11a, 12a) of the moving element (10, 10a) in the longitudinal direction of the moving element (10, 10a). (Fig. 3 and 4 or Fig. 5)

6. Device according to claim 5, **characterised in that** a detector is provided for the voltage induced in the coil (25) upon the approach of the moving element (10) as a function of its movement direction and speed, and **in that** the accelerating or braking current pulse in the coil (25) is triggered with a speed-dependent time delay in an electronic current pulse production unit once the detector has responded.

7. Device according to claim 6, **characterised in that** elevations and indentations are introduced into the lower side of the drive magnet (15) of the moving element (10) and are arranged in the form of a magneto-mechanical bar code, the stray field of which on the continuing movement of the moving element (10), induces a modulated voltage in the coils (25), which, to record the respective moving element (10), is supplied to an analogue/digital converter whose output is supplied to an electronic computing unit.

8. Device according to any one of claims 1 to 7, **characterised in that** an electrically non-conductive antifriction layer, for example made of Teflon, is applied to the outside of the moving element and/or the inside of the rail magnets or electrets.

**Revendications**

1. Dispositif pour le transport de marchandises par sustentation au moyen d'aimants et/ou d'électrets, comportant au moins un rail (21, 22) et au moins un rotor (10), le rotor (10) présentant au moins deux aimants permanents (11, 12) ou électrets reliés l'un à l'autre qui sont polarisés et/ou magnétisés dans un plan et dont les directions de polarisation ($M_1$, $M_2$) et/ou de magnétisation sont opposées l'une à l'autre, et le rotor (10) étant disposé entre au moins deux rails (21, 22) qui consistent en deux aimants permanents (21, 22) et/ou électrets également polarisés et/ou magnétisés dans des directions respectivement opposées, **caractérisé en ce que** les aimants (11, 12) ou les électrets du rotor (10) sont attirés respectivement par les rails adjacents (21, 22) (figures 1, 3).

2. Dispositif selon la revendication 1, **caractérisé en ce que** les au moins deux aimants permanents (11, 12) ou les électrets du rotor (10) sont reliés l'un à l'autre au moyen d'une pièce d'écartement (14) et **en ce que** sous la pièce d'écartement (14) est monté un autre aimant permanent, comportant le cas échant une culasse de retour, dont le champ de dispersion présente, outre une composante verticale, également une composante horizontale dans la direction longitudinale du rotor (10), de sorte qu'il est utilisable comme aimant de commande (15) (figures 3, 4).

**3.** Dispositif pour le transport de marchandises par sustentation au moyen d'aimants, comportant au moins un rail et au moins un rotor, le rotor (10a) présentant au moins deux aimants permanents (11a, 12a) reliés l'un à l'autre qui sont magnétisés parallèlement l'un à l'autre et dont les directions de magnétisation sont orientées de manière identique, et le rail présentant un aimant magnétisé verticalement (21a), **caractérisé en ce que** les aimants (11a, 12a) du rotor sont disposés à l'extérieur de l'aimant (21a) du rail sur ses deux côtés, et **en ce qu'**ils sont attirés par lui (figure 5).

**4.** Dispositif selon la revendication 3, **caractérisé en ce qu'**un aimant supplémentaire (22a) qui est magnétisé dans la direction opposée à celle dans laquelle est magnétisé l'aimant (21a) du rail, est monté au-dessus de l'aimant (21a) du rail sur le rotor (10a) (figure 5).

**5.** Dispositif selon une des revendications 2 à 4, **caractérisé en ce que** pour l'entraînement sont prévues des bobines (25 et/ou 25a, 25b), comportant le cas échant une culasse de retour magnétique (26 et/ou 26a, 26b), par exemple intégrées dans un dispositif de retenue (20 et/ou 20a) de l'aimant (21a) ou des aimants (21, 22) du et/ou des rails, avec lesquelles est produit au moyen d'impulsions de courant électriques un effet dynamique d'accélération ou de freinage avec le champ magnétique de l'aimant de commande (15) ou avec les aimants (11a, 12a) du rotor (10, 10a) dans la direction longitudinale du rotor (10, 10a) (figures 3 et 4 et/ou figure 5).

**6.** Dispositif selon la revendication 5, **caractérisé en ce qu'**est prévu un détecteur pour la tension induite dans la bobine (25) à l'approche du rotor (10) en fonction de sa direction de déplacement et de sa vitesse, et **en ce que** l'impulsion de courant d'accélération ou de freinage est déclenchée dans la bobine (25) avec une temporisation fonction de la vitesse dans une unité électronique de génération d'impulsions de courant, après la réponse du détecteur.

**7.** Dispositif selon la revendication 6, **caractérisé en ce que** dans la face inférieure de l'aimant de commande (15) du rotor (10) sont ménagés des surélévations et des renfoncements, qui sont disposés sous la forme d'un code à barres magnéto-mécanique, dont le champ de dispersion induit dans les bobines (25) lors de l'avance du rotor (10) une tension modulée qui est amenée pour l'enregistrement du rotor concerné (10) à un convertisseur analogique-numérique dont la sortie est amenée à une unité de calcul électronique.

**8.** Dispositif selon une des revendications 1 à 7, **caractérisé en ce que** qu'une couche antifriction électrique non électroconductrice, par exemple en téflon, est appliquée sur la face extérieure du rotor et/ou sur la face intérieure de l'aimant et/ou l'électret du rail.

Fig. 1

Fig. 2

Fig. 3

Fig. 4

12a  14a  22a  10a  11a

N ↑  S ↓ N  N ↑

S  N  S

25b  26b  20a  21a  27  26a  25a

Fig. 5

41  31  32  42

a

d

b

e

c

α

G

33

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *IBM Technical Disclosure Buelltin,* 1977, vol. 19 (8), 2839